# EUROPEAN PATENT SPECIFICATION

(11) **EP 4 201 227 B1**
(45) Date of publication and mention of the grant of the patent: **29.10.2025**
(21) Application number: 22211884.6
(22) Date of filing: 07.12.2022
(51) Int. Cl.: A23N 12/10, A23N 12/12

(54) **ROASTING MACHINE EQUIPPED WITH INDUCTION HEATING SYSTEM**
RÖSTMASCHINE MIT INDUKTIONSHEIZSYSTEM
MACHINE À RÔTIR ÉQUIPÉE D'UN SYSTÈME DE CHAUFFAGE PAR INDUCTION

(30) Priority: 23.12.2021 IT 202100032408
(43) Date of publication of application: 28.06.2023
(73) Proprietor: COFFEE STAR INDUCTION S.R.L., 10143 Torino (IT)
(72) Inventor: MILELLA, Gregorio, 10078 Venaria Reale (TO) (IT); MESCHIA, Maurilio, 14100 Asti (IT)
(74) Representative: Petruzziello, Aldo

(56) References cited:
- DE-U1- 202018 102 671
- KR-B1- 101 254 238
- US-A1- 2016 345 620

## Description

The present invention relates to a roasting machine for seed material with horizontal drum for discontinuous processes equipped with means of heating by electromagnetic induction.

### State of the art

The process of roasting seed material is a process which takes place in several steps generally in a single machine or plant. Here below we will refer to horizontal drum roasting machines in which the process is of the discontinuous type with a loading phase and an unloading phase.

The machines in question are equipped with a rotating and perforated horizontal drum that turns at low speed, internally equipped with a series of paddles whose purpose is to stir the material during the roasting process. The speed of rotation is kept low in such a way that the centrifugal force acting on the material to be processed is less than the force of gravity and consequently the material during rotation always tends to fall back on the lower part of the drum, mixing due to the effect of the paddles.

The paddles have a helical trend in such a way that, with a given direction of rotation, the internal material is carried towards one of the heads of the drum to facilitate unlading when the discharge port is opened.

The roasting process typically begins by introducing the material to be roasted (coffee beans, etc.) into the drum after a preheating phase, in which the rotating drum is brought to a pre-set temperature suitable for receiving the material to be roasted. The purpose of this preheating phase is to avoid an excessively long process of heating of the material to be roasted.

The main stages of the roasting process are:
- heating phase with dehydration
- first cracking phase
- second cracking phase - cooling.

Here below is a brief description of the stages listed:
Heating phase: during this first phase the material in beans (hereafter also referred to as grains or seeds) which enters the machine at room temperature, absorbs heat from the drum and from the air. This is an endothermic phase in which the seed material, by absorbing heat, loses the water still contained, transferring it in the form of steam to the air to then be extracted from the machine.

During this first stage, other temperature-induced chemical transformations occur as regards the chlorogenic acid and trigonelline. During this phase, physical transformations of the seed material also occur: increase in volume due to the internal pressure induced by the transformation of the water contained into vapour, weight loss with consequent change in density. It is important in this first phase to limit the temperature drop and to avoid an excessively long recovery of the preheating temperature. Overly rapid drying will result in a less even distribution of heat inside the bean with a greater risk of external burnings, while an excessively prolonged time leads to a poorly developed roast.

First cracking phase: this phase requires careful control of the rise in heating temperature to allow the Maillard reaction to be triggered and develop.

This first cracking phase, which starts above the temperature of 140°C, involves the condensation reaction between the amino group of an amino acid and the carbonyl group of a reducing sugar, which produces Amadori compounds that represent a stable chemical compound in the early stages of the reaction. No coloured or perfumed compounds are produced at this stage. During this phase, the volatile products escape from the small cracks created in the beans.

Second cracking phase: in this phase, the Maillard reaction becomes more complex and the low molecular weight aromatic precursors are transformed into high molecular weight compounds. Moreover, the Strecker degradation reaction produces, through condensation between alpha-amino acid and alpha-dicarbonyl compounds, new partly volatile chemical compounds including carbon dioxide and brown pigments that give the typical colouring to the grains of the seed material.

In the final stage, the Maillard reaction produces polymeric compounds commonly called melanoidins.

Cooling: this stage, in order to speed up the performance times, takes place outside the roasting drum in a cooling vat. It is important that the beans are brought back to room temperature as soon as possible (4-5 minutes maximum).

The critical aspects of the process can be summarised in the following points, which in turn require the following measures:
1. limiting the temperature drop of the drum and of the air inside the roasting unit at the time of introducing the seed material and allowing rapid temperature recovery for the drum and the material introduced;
2. controlling the rate of temperature rise during the phases in which the Maillard reactions take place;
3. minimising the flow of air through the drum, limiting it to what is strictly necessary in order to remove the volatile products and water vapour in order to avoid oxidation (burning) of the surface of the bean;
4. speeding up the unloading to block roasting at the moment defined by the process.

In order to overcome the above critical factors, roasting machines according to the prior art use two heating modes:
- direct
- indirect.

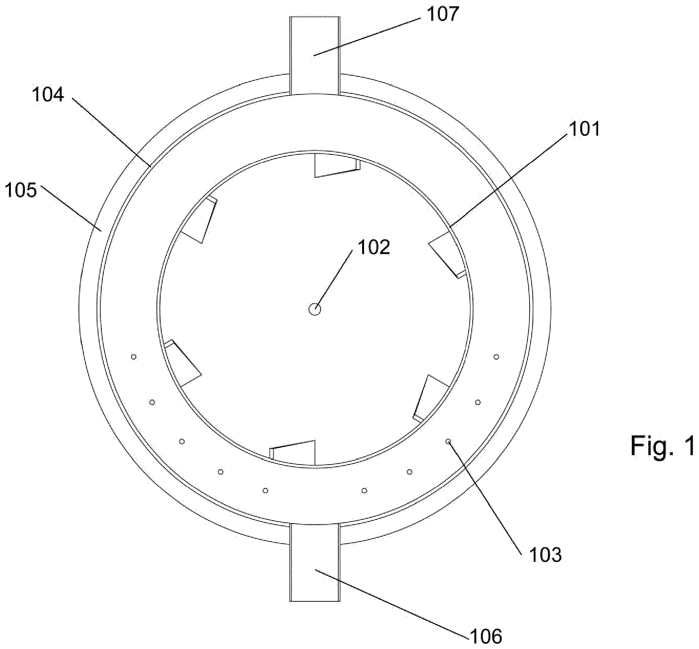

The definition of direct or indirect is associated with the condition of how the drum is heated, with a control thermocouple usually positioned inside the drum. In the first case (refer to Fig. 1), this is electrical heating obtained by positioning a series of resistors 103 around the rotating drum 101 with axis 102, placed inside a structure 104 surrounded by an insulating element 105. The roasting machine is completed by the air supply conduit 106 and the fumes exhaust 107.

Heating takes place by exploiting the radiation from the surface of the resistors and the convective phenomena produced by the flow of air entering from below that escapes from the inside of the drum.

Since the surface of the heaters is small relative to the power to be delivered, the heater surface temperature is very high. This fact limits the maximum power of the heaters.

Relative to the critical points of the process, this solution is critical with regard to point 1, since at the time of entry of the material, the limitation of the temperature drop is determined exclusively by the thermal capacity of the drum.

Since the heating of the grains requires first the heating of the drum and subsequently through contact (due to stirring) the heating of the grains takes place, this mode of operation is conditioned by the low heat exchange capacity.

The latter point can be partly limited by passing heated air from the resistors through the drum in order to have a heat transfer to the grains not only through contact but also through convection. The passage of air must however be limited for three reasons:
1. risk of oxidising the surface of the beans when the temperature approaches the maximum process temperature;
2. too rapid extraction of moisture causing a breakage of the grains;
3. loss of energy and consequent reduction in machine efficiency.

With this type of heating, even though there is a good correspondence between the temperature read on the thermocouple and the temperature of the grains, thanks to the fact that the flow of air through the drum is kept low, it is not easy to effectively control the temperature ramp-up in the second and third phase of the process in that the heating process takes place through the drum whose temperature is not measured.

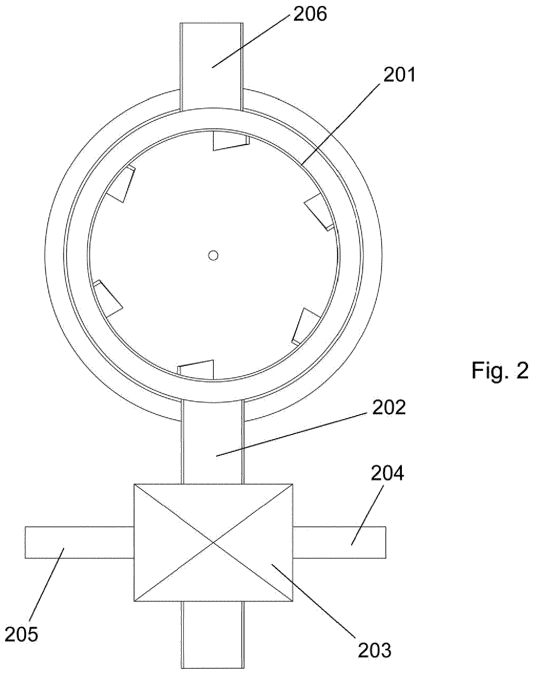

In the case of indirect heating, instead, these are mainly machines (Fig. 2) equipped with gas heating where the rotating drum 201 is traversed by a flow of air that enters from a feed conduit 202 after passing through a heat exchanger 203 where it receives thermal power from the fumes coming from a burner (not shown in the drawing) and passing in the exchanger from conduit 204 to conduit 205. The air flow after traversing the rotating drum 201 exits from the conduit 206.

This solution has the advantage of being able to realise high powers with low costs, but on the other hand it has certain limitations with reference to the critical factors of the process indicated previously:
1. in order to be rapid, the temperature rise requires a large flow of very hot air that tends to oxidise the surface of the grain of the seed material;
2. the temperature control system, being indirect, directly heats the air that traverses the drum where the thermocouple is placed, but on the other hand the thermocouple only supplies a representation of the temperature of the material to be roasted in stationary conditions. In transients, since air must be the element that transfers heat to the material, the thermocouple supplies a much higher temperature than that of the material to be roasted;
3. because of the temperature, the grains in contact with the flow of hot air in the second and third phases tend to oxidise.

In conclusion, this type of machine determines a lower quality roasting process with respect to the direct heating solution. In addition, the fact that gas is used as element for feeding the heating makes its applicability not always easy, particularly in certain installation environments.

US 2016/345620 A1 describes a small coffee bean roaster, for family use, comprising a metal drum (11), on a lower sector of the side surface of which is applied an insulating panel (12), under which is arranged a coil (13) with axis perpendicular to this surface which, when a current is passed through it, generates a magnetic field capable of heating the metal drum and thus roasting the coffee beans inside it.

In order to avoid possible burns to the user, the metal drum (11) is enclosed in a casing (25), below which an opening (251) is provided suitable for allowing heating of the metal drum by magnetic induction by the coil (13), mounted on a coil holder (15), and placed at this opening, to which it is fixed by means of a frame (26).

Such a solution, which produces concentrated heating in a limited area of the metal drum, would not be applicable to a rotary drum roasting machine according to the present invention, where it is necessary to heat the drum and its interior uniformly.

### Summary of the invention

The object of the present invention is therefore to eliminate the limiting points of the solutions of the prior art illustrated.

More particularly, an object of the invention is to produce a heating system, applied to a horizontal drum roasting machine, which makes it possible to obtain a high specific power without the limitations on geometry imposed by electric heaters.

Another object of the invention is to produce a roasting machine for seed or bean material with indirect heat transfer capable of overcoming the critical points disclosed above.

A further object is to realise a roasting machine capable of performing an accurate control of the power required by the heating elements on the basis of the temperature values measured in various points of the structure.

These and other objects are achieved by a roasting device for seed materials according to the invention having the features listed in the appended independent claim 1.

Advantageous embodiments of the invention are disclosed by the dependent claims.

Substantially, the present invention relates to a roasting machine for seed materials comprising a loading conduit for the introduction of the material to be roasted into a horizontal drum supported by a rotating shaft and defining a roasting chamber and an unloading conduit for the recovery of the treated material, said rotating horizontal drum being internally provided with a series of paddles for stirring the material, wherein, in operation, said rotating drum is traversed by a flow of air between an air inlet conduit and an outlet conduit for discharging the volatile gases that develop during the roasting operation wherein externally and coaxially to the rotating drum an outer steel cylinder is provided, which is in turn surrounded by insulation on the outside of which is placed at least one coil coaxial to the rotating drum, which substantially covers the entire surface thereof, to induce an electromagnetic field in the cylinder in such a way that the currents induced in the cylinder create through the Joule effect the generation of heat which, by radiation and convection, will be transferred to the rotating drum and therefore an indirect heating of the same and of the roasting chamber.

### Brief description of the drawings

Further features of the invention will be made clearer by the following detailed description, referred to an embodiment thereof purely by way of non-limiting example, illustrated in the accompanying drawings, wherein:
Figure 1 shows in cross section a horizontal drum roasting machine with electric heater according to the prior art;
Figure 2 shows in cross section a horizontal drum roasting machine with heating by means of an air flow heated by means of an exchanger with a flow of fumes from a gas burner according to the prior art;
Figure 3 shows in axial section the reference structure of the induction heating system that is the subject of the invention;
Figure 4 shows in cross section, along line A-A of Fig. 3, the reference structure of the induction heating system, the subject of the invention; and
Figures 5a, 5b, 5c, 5d and 6 illustrate control and regulation diagrams in a roasting machine with induction heating system according to the invention.

### Detailed description of the invention

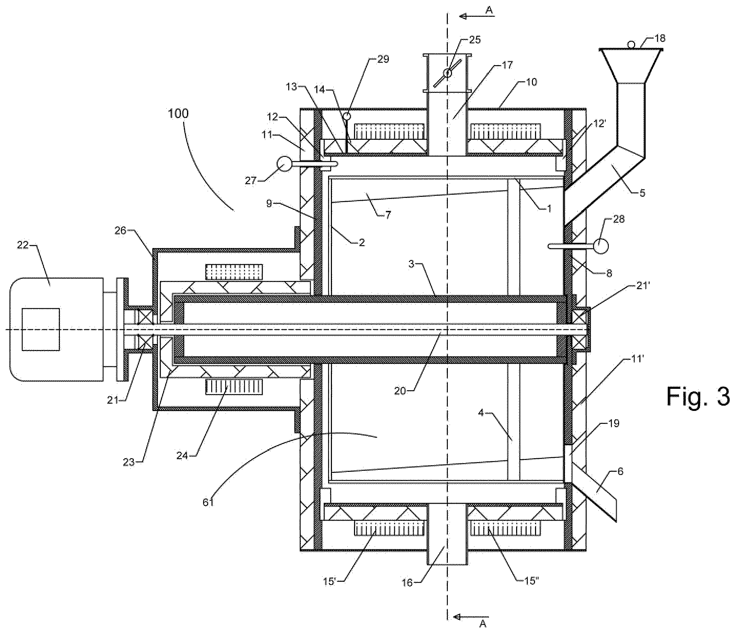

A detailed description will now be given of a roasting machine with electromagnetic induction heating in accordance with the present invention, with reference to the accompanying drawings and in particular to Fig. 3. In Fig. 3, the roasting machine is shown in longitudinal section on the axis of rotation of the drum in its basic version common to all derived versions and is denoted overall by reference numeral 100.

The roasting machine 100 consists of a rotating metal drum 1, perforated substantially over the entire surface, closed on one side by a disc 2 integral with it and connected through it integrally to a central shaft 3. The drum 1 is in turn connected, by means of a spoke wheel 4, to the central shaft 3 near the other side at a certain distance from it, so as not to interfere with the other devices during rotation. The spoke wheel 4 has thin spokes such as to allow loading of the grains through the loading conduit 5 and unloading through the unloading conduit 6. The drum 1 is internally provided with a series of paddles 7 having a helical trend such as to carry the material through the effect of the rotation towards the discharge 6 and the interior of the drum 1 defines a roasting chamber 61.

On the loading and unloading side a plate 8 is placed and on the opposite side a second plate 9, which constitute the structure of the roasting machine 100. Said plates 8 and 9 can be provided externally with two heat insulation elements 11, 11' to reduce thermal losses from the ends. The plate 8 is placed at a few tenths of a millimetre from the rotating drum 1 in such a way as to prevent the beans from exiting from the drum during rotation.

The structure made up of the plates 8 and 9 carries by means of suitable insulation elements 12, 12' a fixed cylinder 13 in stainless steel, preferably from the 400 series (stainless steel with ferromagnetic characteristics) which constitutes the outer casing of the roasting zone. The cylinder 13 is coaxial to the rotating drum 1 and is surrounded by insulation (14) externally to which is placed at least one coil 15, which substantially covers the entire surface thereof, in order to induce an electromagnetic field in the cylinder 13. The eddy currents that are generated in the cylinder produce by resistive effect (joule) a thermal power in the cylinder 13 which in turn transfers heat to the rotating drum 1 by radiation and convection. A thermocouple 27 facing the gap between the rotating drum 1 and the outer cylinder 13 is provided to read the temperature of the air between them.

As shown in the drawings, the coil 15 has a horizontal axis, coaxial to the drum 1 and to the cylinder 13.

Preferably, the coil 15 is divided into two half-coils 15' and 15", in such a way that between them in the lower part there is space for forming an inlet hole 16 for air and above an outlet hole 17 for the volatile gases that develop during the roasting reactions.

Loading takes place through the conduit 5 which, after the introduction of the material to be roasted, is closed again by means of a lid 18 or similar device.

Unloading is carried out through the unloading conduit 6 closed by means of the door 19, designed in such a way that in the closed condition it leaves no blind space in which the material to be roasted could stagnate. The door can be equipped with a peephole to check the state of colouring of the beans during the roasting process.

The air extraction conduit 17 is provided with a valve 25 (partialisation or flow regulation valve) which can be regulated manually or by means of electric control to limit the flow of air that traverses the roasting cylinder. In particular, in the case of an electrically controlled valve, the opening of the valve can be regulated during the roasting cycle to reduce the flow in the stages in which oxidation is to be limited or to increase the flow in the early stages of moisture extraction. Shaft 3 is made with a diameter as large as possible compatibly with the size of the chamber, the amount of material to be roasted and the minimum volume to be left free to allow the material to be mixed. The larger the diameter, the greater the surface for thermal exchange by radiation and convection.

Shaft 3, drilled internally to reduce the mass thereof, has in its interior a second rotation shaft 20 of smaller diameter, supported at its ends by two bearings 21, 21' and set in rotation by a motor 22 placed in the opposite part of the loading and unloading area. The shaft 20 is integral with the shaft 3 and with it with the drum 1. Advantageously, outside the area where the roasting takes place, shaft 3 is surrounded by a thermal insulation protection 23 attached to the machine structure, around which a second coil 24 is placed to induce an electromagnetic field in shaft 3. The eddy currents that are generated in the shaft produce through resistive effect a thermal power in shaft 3. In this way, the thermal power introduced into the rotating shaft, not being able to diffuse externally in the area where the thermal insulation 23 is present, diffuses towards the interior of the drum radiating towards the inner surface of the rotating drum.

In this way, when a second coil 24 is placed outside the rotating shaft 3 in a position outside the roasting chamber 61, the currents induced in the shaft 3 create by Joule effect thermal power in the shaft itself which in turn transfers heat by radiation and convection to the rotating drum **1,** to the air inside the drum and directly to the material to be roasted when present.

Shaft 3 in electrically conductive material must also have a high thermal conductivity. It can be made in aluminium, with surface treatments suitable for the application, or, more advantageously, it can be made with a bimetal tube internally in copper or aluminium for heat transfer and an outer covering tube preferably made of 400 series stainless steel (stainless steel with ferromagnetic properties) where the eddy currents are induced.

A thermocouple 28 is mounted on the front plate 8 facing the interior of the drum in such a way as to be able to measure the air temperature inside the roasting machine. Shielding elements 10 and 26 are placed outside of the coils 15', 15" and 24.

There is also a contact thermocouple 29 on the outer cylinder 13.

Sealing elements not shown in the drawings on the rotating shaft and between the flanges that make up the structure complete the machine.

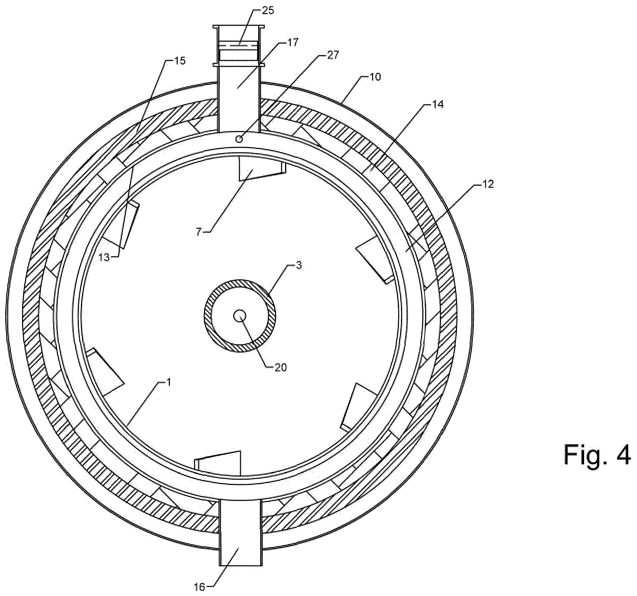

Figure 4 shows a cross section of the roasting machine in the area of the drum, where it is possible to see the lower air inlet conduit 16 and the upper fumes outlet conduit 17 with the partialisation valve 25

This induction heating solution makes it possible to heat the roasting area both from the exterior of the rotating drum and from the interior of the drum, overcoming the limitations of state-of-the-art solutions. By using induction heating it is possible to directly supply energy to the element, outer cylinder and inner shaft, through the effect of the induced currents without the use of a resistor to be coupled to the element to be heated.

The solution, by allowing the flow of air through the drum to be limited, combined with the possibility of completely insulating the outer casing, is able to reduce energy consumption with respect to current solutions with electrical resistor, guaranteeing greater safety with respect to indirect solutions that use gas heating.

Furthermore, in the configuration adopted, the coils are placed outside the roasting volume in an area with easy maintenance and the coils can be kept in a cooled zone.

With reference to the critical conditions for achieving an optimal roasting process, the proposed solution has significant advantages. In particular, it makes it possible to:
1) Limit the temperature drop of the drum and of the air inside.

The solution proposed supplies heat through radiation by the outer cylinder and the inner shaft and by convection between the hot walls and the drum. By applying correct dimensioning it is possible to have available a thermal capacity with a high surface area of radiation and heat exchange ready to supply additional thermal power to the thermal power of the source to compensate for the drop in temperature caused by the introduction of the material to be roasted.

### 2) Enable rapid temperature recovery for the drum and the material introduced

The solution proposed, thanks to the presence of a radiation and convective heat exchange surface also on the inside, is capable of rapidly heating the air inside the drum and directly supplying by radiation to the material to be toasted the energy for heat recovery, which without this source would only occur by convection with the air and by contact with the rotating drum.

### 3) Control the rate of temperature rise during the phases in which the Maillard reactions take place

The dual heat source enables more precise control of temperature rise rates with respect to solutions with single thermal source in that it is possible to associate the control of the power of the induction heater present on the outer cylinder with the thermocouple placed between the outer cylinder and the rotating drum, and the control of the power of the induction heater on the inner shaft with the thermocouple placed inside the rotating drum. In this way it is possible to fully control the roasting environment both outside and inside the drum, without having to pass excess air through the drum to bring thermal power into the drum.

### 4) Restrict the flow of air through the drum

The proposed roasting machine configuration does not require a thermal flow to heat the material inside. The flow of air is limited to only the flow necessary for extracting the moisture and the volatile components present in the material to be roasted. For this purpose, the valve placed on the extraction conduit allows the passage section to be reduced.

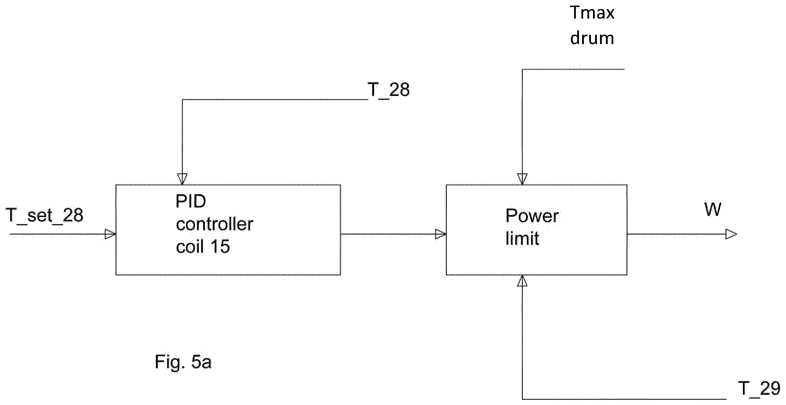

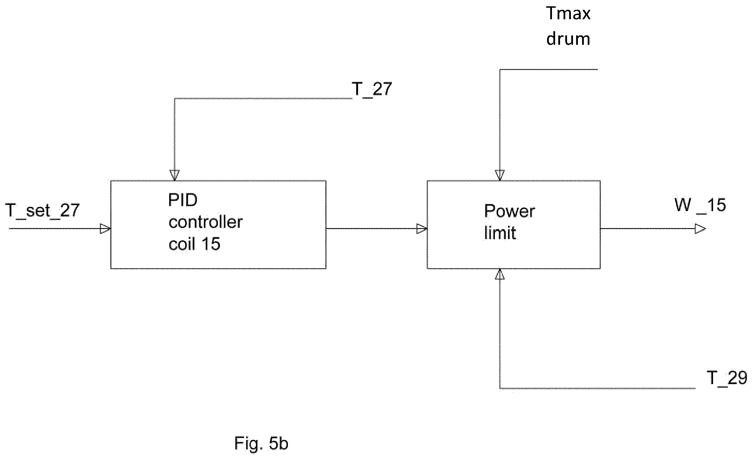

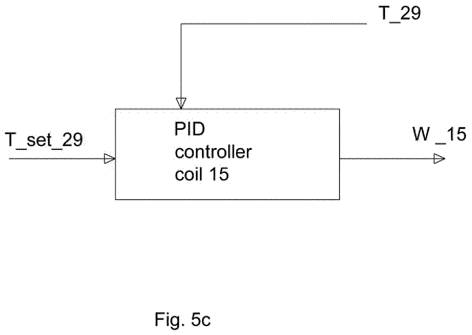

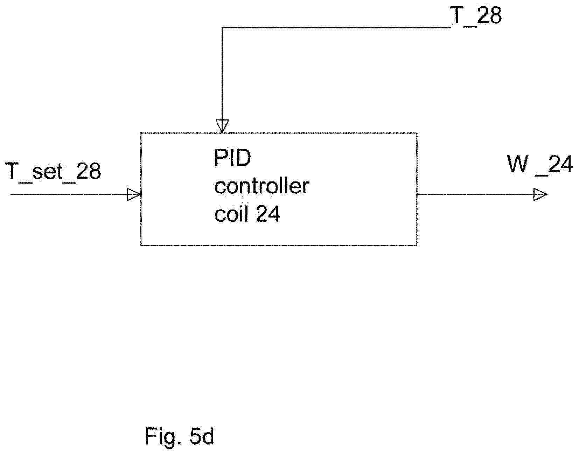

The regulation of power to the induction coils (or inductors) is carried out according to the following control logic:
- for inductor 15, in the case where the inductor on the shaft 24 is not used, the regulation is carried out according to Figure 5a using the temperature read with the thermocouple 28 as control signal and setting a temperature limit on the external cylinder 13 and using the thermocouple 29 as signal to verify that the threshold has been reached;
- for inductor 15, in the case where the inductor on the shaft 24 is also used, the regulation is carried out according to Figure 5b using as control signal the temperature read with the thermocouple 27 and setting a temperature limit at the outer cylinder 13 and using the thermocouple 29 as signal to verify that the threshold has been reached;
- alternatively for inductor 15, either in the case of presence or absence of the inductor 24, it is possible to carry out the temperature control using as control signal the temperature of the outer drum read with the thermocouple 29 according to diagram 5c;
- for inductor 24 the regulation is carried out according to Figure 5d using the temperature read with thermocouple 28 as the control signal.

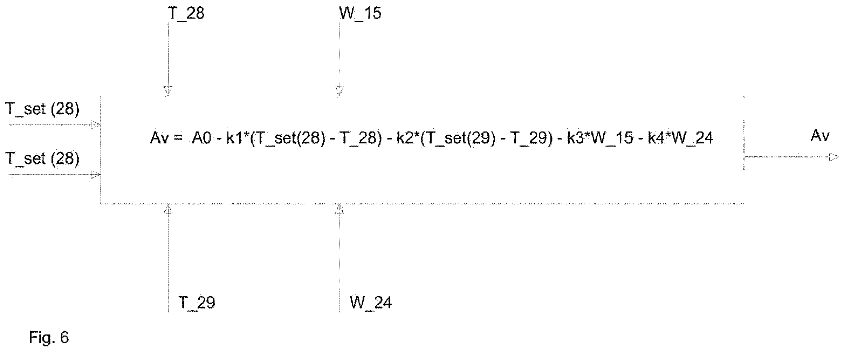

The regulation of the partialisation valve 25 of unloading conduit 17 is carried out according to the diagram in Figure 6 as a function of the following parameters:
- error between set and real value of the temperature outside the rotating drum referred to thermocouple 27;
- error between set and real value of the temperature inside the rotating drum referred to thermocouple 28;
- power applied by the induction coil 15;
- power applied by the induction coil 24.

All four terms give a negative proportional contribution with different weight to the opening of the valve.

From the foregoing, the advantages are clear of a roasting machine according to the present invention, which allows an improved roasting process to be obtained in terms of quality of the roasted material and at the same time more efficient, through direct control of the powers involved.

The present invention is not limited to the particular embodiment previously described and illustrated in the accompanying drawings, but numerous detailed changes may be made thereto, within the reach of the person skilled in the art, without thereby departing from the scope of the invention as defined in the appended claims.

## Claims

1. Roasting machine (100) for seed material comprising a loading conduit (5) for introducing the material to be roasted into a horizontal drum (1), perforated substantially over the whole surface, supported by a rotating shaft (3) and defining a roasting chamber (61), and an unloading conduit (6) for recovering the treated material, said horizontal rotating drum (1) being internally provided with a series of paddles (7) for stirring the material, wherein, in operation, said rotating drum (1) is traversed by a flow of air between an air inlet conduit (16) and an outlet conduit (17) for discharging the volatile gases that develop during the roasting operation, wherein externally and coaxially to the rotating drum (1) a fixed outer cylinder (13) in steel is provided, which is in turn surrounded by insulation (14) outside of which is placed at least one coil (15) coaxial to the rotating drum (1), which substantially covers the entire surface thereof, to induce an electromagnetic field in the cylinder (13) in such a way that the currents induced in the cylinder (13) create by the Joule effect the generation of heat which, by radiation and convection, is transferred to the rotating drum (1) and therefore an indirect heating of the same and of the roasting chamber (61).

2. Roasting machine (100) for seed material according to claim 1, **characterised in that** two half-coils (15', 15") are provided, arranged specularly at the sides of the air inlet conduit (16) and of the outlet conduit (17) to allow the flow of air to enter from below and volatile products to exit from above.

3. Roasting machine (100) for seed material according to claim 1 or 2, **characterised in that** outside of the roasting chamber (61) the shaft (3) is surrounded by a fixed protection of thermal insulation (23) around which is placed a second coil (24) configured to induce an electromagnetic field in the shaft (3), which, through the thermal power created by the Joule effect, in turn transfers additional heat by radiation and convection to the rotating drum (1), to the air in the roasting chamber (61) and directly to the material to be roasted, when present.

4. Roasting machine (100) for seed material according to one of the preceding claims, wherein the shaft (3) is internally hollow to reduce the mass thereof, it has in its interior a second rotation shaft (20) of smaller diameter which is supported at its ends by two bearings (21, 21') and is rotated by a motor in such a way that the second shaft (20) is integral with the shaft (3) and the drum (1).

5. Roasting machine (100) for seed material according to one of the preceding claims, **characterised in that** the rotating shaft (3) is made of an electrically conductive material with high thermal conductivity and is preferably made of aluminium, with surface treatments suitable for the application, or made with a bimetal tube internally in copper or aluminium and externally in stainless steel.

6. Roasting machine (100) for seed material according to one of the preceding claims, wherein said loading (5) and unloading (6) conduits are placed at an open side of the rotating drum (1), at a distance of a few tenths of a millimetre from which is placed a plate (8) suitable for preventing the seed material from escaping from the drum during rotation, while the opposite side of the drum is closed by a disc (2), externally to which is placed a second plate (9), said plates (8, 9) constituting the structure of the roasting machine (100) and being optionally equipped externally with two elements of thermal insulation (11, 11') to reduce thermal losses from the ends.

7. Roasting machine (100) for seed material according to one of the preceding claims, comprising a shielding element (10) externally to said at least one first coil (15) and, when directly or indirectly dependent on claim 3, further comprising a shielding element (26) around said second coil (24) provided externally to the roasting chamber (61).

8. Roasting machine (100) for seed material according to one of the preceding claims, **characterised in that** it comprises a first thermocouple (28) placed inside the rotating drum (1) to detect the temperature inside the roasting chamber (61), a second thermocouple (27) facing the gap between rotating drum (1) and cylinder (13), such as to read the temperature of the air in the space between these components, and a third thermocouple (29) in contact on the cylinder (13) external to the rotating drum (1).

9. Roasting machine (100) for seed material according to claim 8, **characterised in that** the regulation of the power to said at least one induction coil (15) is performed using as a control signal the temperature (T_29) of the outer cylinder (13) read with said third thermocouple (29).

10. Roasting machine (100) for seed material according to claim 8 when not dependent on claim 3, **characterised in that** the regulation of the power to said at least one induction coil (15) is performed by using as input control signal to a PID controller the temperature of the air (T_28) inside the rotating drum detected by means of the thermocouple (28) placed inside the rotating drum (1) and placing a maximum limit on the temperature (T_29) of the outer cylinder (13) detected by means of said third thermocouple (29).

11. Roasting machine (100) for seed material according to claim 8, **characterised in that** the regulation of the power to said at least one induction coil (15) is achieved by using as input control signal to a PID controller the temperature (T_27) in the gap between rotating drum (1) and cylinder (13) read with the second thermocouple (27) and setting a maximum temperature limit of the outer cylinder (13) and using as control signal the thermocouple (29) placed thereon.

12. Roasting machine (100) for seed material according to claim 11 or according to any one of claims 3 to 9, **characterised in that** the regulation of the power to said second induction coil (24) is obtained by using as control signal the temperature (T_28) inside the rotating drum detected by means of the first thermocouple (28) as input to a PID controller.

13. Roasting machine (100) for seed material according to any one of the preceding claims, wherein said unloading conduit (17) is provided with an exhaust air flow regulating valve (25) that can be regulated manually or by electrical control to limit the flow of air that traverses the roasting cylinder.

14. Roasting machine (100) for seed material according to claim 13, when dependent on claim 11 or on one of claims 3 to 9, wherein the regulation of the exhaust air flow from the valve (25) is carried out as a function of the temperature error inside the roasting chamber (61) referred to the thermocouple (28), of the error of the temperature outside the rotating drum (1) referred to the thermocouple (27), the power applied to said at least one induction coil (15) and the power applied to the second induction coil (24).

## Patentansprüche

1. Röstmaschine (100) für Saatgut mit einer Beladeleitung (5) zum Einbringen des Röstgutes in eine horizontale, im Wesentlichen vollflächig perforierte Trommel (1), die von einer rotierenden Welle (3) getragen wird und eine Röstkammer (61) definiert, und einer Entladeleitung (6) zur Rückgewinnung des behandelten Gutes, wobei die horizontale rotierende Trommel (1) innen mit einer Reihe von Schaufeln (7) zum Rühren des Gutes versehen ist, wobei im Betrieb die rotierende Trommel (1) von einem Luftstrom zwischen einer Lufteintrittsleitung (16) und einer Austrittsleitung (17) zum Abführen der beim Röstvorgang entstehenden flüchtigen Gase durchströmt wird, wobei
außen und koaxial zur rotierenden Trommel (1) ist ein feststehender Außenzylinder (13) aus Stahl vorgesehen, der von einer Isolierung (14) umgeben ist, außerhalb derer mindestens eine zur rotierenden Trommel (1) koaxiale Spule (15) angeordnet ist, die im Wesentlichen deren gesamte Oberfläche bedeckt, um im Zylinder (13) ein elektromagnetisches Feld derart zu induzieren, dass die im Zylinder (13) induzierten Ströme durch den Joule-Effekt die Erzeugung von Wärme herbeiführen, die durch Strahlung und Konvektion auf die rotierende Trommel (1) übertragen wird und somit eine indirekte Erwärmung derselben und der Röstkammer (61) erfolgt.

2. Röstmaschine (100) für Saatgut nach Anspruch 1, **dadurch gekennzeichnet, dass** zwei Halbspulen (15', 15") vorgesehen sind, die spiegelbildlich an den Seiten der Lufteintrittsleitung (16) und der Austrittsleitung (17) angeordnet sind, um den Eintritt von Luft von unten und den Austritt von flüchtigen Produkten von oben zu ermöglichen.

3. Röstmaschine (100) für Saatgut nach Anspruch 1 oder 2, **dadurch gekennzeichnet, dass** die Welle (3) außerhalb der Röstkammer (61) von einem festen Wärmeisolierungsschutz (23) umgeben ist, um den herum eine zweite Spule (24) angeordnet ist, die dazu konfiguriert ist, ein elektromagnetisches Feld in der Welle (3) zu induzieren, das wiederum durch die durch den Joule-Effekt erzeugte Wärmeleistung zusätzliche Wärme durch Strahlung und Konvektion an die rotierende Trommel (1), an die Luft in der Röstkammer (61) und direkt an das Röstgut, sofern vorhanden, überträgt.

4. Röstmaschine (100) für Saatgut nach einem der vorhergehenden Ansprüche, wobei die Welle (3) innen hohl ist, um ihre Masse zu verringern, sie in ihrem Inneren eine zweite Drehwelle (20) mit kleinerem Durchmesser aufweist, die an ihren Enden durch zwei Lager (21, 21') abgestützt ist und von einem Motor so gedreht wird, dass die zweite Welle (20) mit der Welle (3) und der Trommel (1) einstückig ist.

5. Röstmaschine (100) für Saatgut nach einem der vorhergehenden Ansprüche, **dadurch gekennzeichnet, dass** die rotierende Welle (3) aus einem elektrisch leitenden Material mit hoher Wärmeleitfähigkeit besteht und vorzugsweise aus Aluminium mit für die Anwendung geeigneten Oberflächenbehandlungen oder mit einem Bimetallrohr innen aus Kupfer oder Aluminium und außen aus Edelstahl besteht.

6. Röstmaschine (100) für Saatgut nach einem der vorhergehenden Ansprüche, **dadurch gekennzeichnet, dass** die Belade- (5) und Entlade- (6) -Leitungen an einer offenen Seite der rotierenden Trommel (1) angeordnet sind, in einem Abstand von einigen Zehntel Millimetern von ihnen eine Platte (8) angeordnet ist, die geeignet ist, das Austreten des Saatguts aus der Trommel während der Rotation zu verhindern, während die gegenüberliegende Seite der Trommel durch eine Scheibe (2) verschlossen ist, außerhalb derer eine zweite Platte (9) angeordnet ist, wobei die Platten (8, 9) die Struktur der Röstmaschine (100) bilden und optional außen mit zwei Elementen der Wärmeisolierung (11, 11') ausgestattet sind, um Wärmeverluste von den Enden zu verringern.

7. Röstmaschine (100) für Saatgut nach einem der vorhergehenden Ansprüche, umfassend ein Abschirmelement (10) außerhalb der mindestens einen ersten Spule (15) und, wenn direkt oder indirekt von Anspruch 3 abhängig, ferner umfassend ein Abschirmelement (26) um die zweite Spule (24), das außerhalb der Röstkammer (61) vorgesehen ist.

8. Röstmaschine (100) für Saatgut nach einem der vorhergehenden Ansprüche, **dadurch gekennzeichnet, dass** sie ein erstes Thermoelement (28), das im Inneren der rotierenden Trommel (1) angeordnet ist, um die Temperatur im Inneren der Röstkammer (61) zu erfassen, ein zweites Thermoelement (27), das dem Spalt zwischen der rotierenden Trommel (1) und dem Zylinder (13) zugewandt ist, um die Temperatur der Luft in dem Raum zwischen diesen Bauteilen abzulesen, und ein drittes Thermoelement (29) in Kontakt mit dem Zylinder (13) außerhalb der rotierenden Trommel (1) umfasst.

9. Röstmaschine (100) für Saatgut nach Anspruch 8, **dadurch gekennzeichnet, dass** die Regulierung der Leistung zu der mindestens einen Induktionsspule (15) unter Verwendung der mit dem dritten Thermoelement (29) ausgelesenen Temperatur (T_29) des Außenzylinders (13) als Steuersignal durchgeführt wird.

10. Röstmaschine (100) für Saatgut nach Anspruch 8, wenn sie nicht von Anspruch 3 abhängt, **dadurch gekennzeichnet, dass** die Regulierung der Leistung zu der mindestens einen Induktionsspule (15) durchgeführt wird, indem als Eingangssteuersignal für einen PID-Regler die Temperatur der Luft (T_28) im Inneren der rotierenden Trommel verwendet wird, die mittels des Thermoelementes (28) erfasst wird, das im Inneren der rotierenden Trommel (1) angeordnet ist, und eine Höchstgrenze für die Temperatur (T_29) des Außenzylinders (13) festgelegt wird, die mittels des dritten Thermoelementes (29) erfasst wird.

11. Röstmaschine (100) für Saatgut nach Anspruch 8, **dadurch gekennzeichnet, dass** die Regulierung der Leistung zu der mindestens einen Induktionsspule (15) erreicht wird, indem als Eingangssteuersignal für einen PID-Regler die Temperatur (T_27) in dem Spalt zwischen der rotierenden Trommel (1) und dem Zylinder (13) verwendet wird, die mit dem zweiten Thermoelement (27) abgelesen wird, und indem eine maximale Temperaturgrenze des Außenzylinders (13) festgelegt wird und als Steuersignal das daran angeordnete Thermoelement (29) verwendet wird.

12. Röstmaschine (100) für Saatgut nach Anspruch 11 oder nach einem der Ansprüche 3 bis 9, **dadurch gekennzeichnet, dass** die Regulierung der Leistung zu der zweiten Induktionsspule (24) erhalten wird, indem als Steuersignal die mittels des ersten Thermoelements (28) erfasste Temperatur (T_28) im Inneren der rotierenden Trommel als Eingabe in einen PID-Regler verwendet wird.

13. Röstmaschine (100) für Saatgut nach einem der vorhergehenden Ansprüche, wobei die Entladeleitung (17) mit einem Abluftstromregelventil (25) versehen ist, das manuell oder durch elektrische Steuerung geregelt werden kann, um den Luftstrom zu begrenzen, der den Röstzylinder durchströmt.

14. Röstmaschine (100) für Saatgut nach Anspruch 13, wenn sie von Anspruch 11 oder einem der Ansprüche 3 bis 9 abhängt, wobei die Regulierung des Abluftstroms aus dem Ventil (25) in Abhängigkeit von dem Temperaturfehler im Inneren der Röstkammer (61), bezogen auf das Thermoelement (28), dem Fehler der Temperatur außerhalb der rotierenden Trommel (1), bezogen auf das Thermoelement (27), von der an die mindestens eine Induktionsspule (15) angelegten Leistung und von der an die zweite Induktionsspule (24) angelegten Leistung durchgeführt wird.

## Revendications

1. Machine de torréfaction (100) pour des grains à torréfier comprenant un conduit de chargement (5) pour introduire les grains à torréfier dans un tambour horizontal (1), perforé sensiblement sur toute sa surface, supporté par un arbre rotatif (3) et définissant une chambre de torréfaction (61), et un conduit de déchargement (6) pour récupérer les grains traités, ledit tambour rotatif horizontal (1) est équipé à l'intérieur d'une série de palettes (7) pour remuer les grains, dans lequel, en fonctionnement, ledit tambour rotatif (1) est traversé par un flux d'air entre un conduit d'entrée d'air (16) et un conduit de sortie (17) pour évacuer les gaz volatils qui se développent au cours de l'opération de torréfaction, dans lequel
à l'extérieur et coaxialement au tambour rotatif (1) est prévu un cylindre extérieur fixe (13) en acier, qui est à son tour entouré d'une isolation (14) à l'extérieur de laquelle est placée au moins une bobine (15) coaxiale au tambour rotatif (1), qui couvre sensiblement toute la surface de ce dernier, pour induire un champ électromagnétique dans le cylindre (13) de telle sorte que les courants induits dans le cylindre (13) créent par effet Joule une génération de chaleur qui, par rayonnement et convection, est transférée au tambour rotatif (1) et donc un chauffage indirect de ce dernier et de la chambre de torréfaction (61).

2. Machine de torréfaction (100) pour des grains à torréfier selon la revendication 1, **caractérisée par** la présence de deux demi-bobines (15', 15") disposées de manière spéculaire sur les côtés du conduit d'entrée d'air (16) et du conduit de sortie (17) pour permettre au flux d'air d'entrer par le bas et aux produits volatils de sortir par le haut.

3. Machine de torréfaction (100) pour des grains à torréfier selon la revendication 1 ou 2, **caractérisé en ce qu'**à l'extérieur de la chambre de torréfaction (61), l'arbre (3) est entouré d'une protection fixe d'isolation thermique (23) autour de laquelle est placée une seconde bobine (24) configurée pour induire un champ électromagnétique dans l'arbre (3) qui, par la puissance thermique créée par l'effet Joule, transfère à son tour par rayonnement et convection de la chaleur supplémentaire au tambour rotatif (1), à l'air de la chambre de torréfaction (61) et directement à la matière à torréfier, si elle est présente.

4. Machine de torréfaction (100) pour des grains à torréfier selon l'une des revendications précédentes, dans laquelle l'arbre (3) est creux à l'intérieur pour en réduire la masse, il comporte à l'intérieur un second arbre de rotation (20) de plus petit diamètre qui est supporté à ses extrémités par deux paliers (21, 21') et est entraîné en rotation par un moteur de telle sorte que le second arbre (20) est solidaire de l'arbre (3) et du tambour (1).

5. Machine de torréfaction (100) pour des grains à torréfier selon l'une des revendications précédentes, **caractérisée en ce que** l'arbre rotatif (3) est constitué d'un matériau conducteur d'électricité à haute conductivité thermique et est de préférence en aluminium, avec des traitements de surface adaptés à l'application, ou constitué d'un tube bimétallique en cuivre ou en aluminium à l'intérieur et en acier inoxydable à l'extérieur.

6. Machine de torréfaction (100) pour des grains à torréfier selon l'une des revendications précédentes, dans laquelle lesdits conduits de chargement (5) et de déchargement (6) sont placés sur un côté ouvert du tambour rotatif (1), à une distance de quelques dixièmes de millimètres duquel est placée une plaque (8) pouvant empêcher les graines à torréfier de s'échapper du tambour pendant la rotation, tandis que le côté opposé du tambour est fermé par un disque (2), à l'extérieur duquel est placée une seconde plaque (9), lesdites plaques (8, 9) constituant la structure de la machine de torréfaction (100) et étant éventuellement équipées extérieurement de deux éléments d'isolation thermique (11, 11') pour réduire les pertes thermiques des extrémités.

7. Machine de torréfaction (100) pour des grains à torréfier selon l'une des revendications précédentes, comprenant un élément de blindage (10) extérieur à ladite au moins une première bobine (15) et, lorsqu'elle dépend directement ou indirectement de la revendication 3, comprenant en outre un élément de blindage (26) autour de ladite seconde bobine (24) fournie à l'extérieur de la chambre de torréfaction (61).

8. Machine de torréfaction (100) pour des grains à torréfier selon l'une des revendications précédentes, **caractérisée en ce qu'**elle comprend un premier thermocouple (28) placé à l'intérieur du tambour rotatif (1) pour détecter la température à l'intérieur de la chambre de torréfaction (61), un deuxième thermocouple (27) tourné vers l'espace entre le tambour rotatif (1) et le cylindre (13), de manière à lire la température de l'air dans l'espace entre ces composants, et un troisième thermocouple (29) en contact sur le cylindre (13) à l'extérieur du tambour rotatif (1).

9. Machine de torréfaction (100) pour des grains à torréfier selon la revendication 8, **caractérisée en ce que** la régulation de la puissance de ladite au moins une bobine d'induction (15) est effectuée en utilisant comme signal de commande la température (T_29) du cylindre extérieur (13) lue avec ledit troisième thermocouple (29).

10. Machine de torréfaction (100) pour des grains à torréfier selon la revendication 8 lorsqu'elle ne dépend pas de la revendication 3, **caractérisée en ce que** la régulation de la puissance de ladite au moins une bobine d'induction (15) est effectuée en utilisant comme signal de commande d'entrée à un contrôleur PID la température de l'air (T_28) à l'intérieur du tambour rotatif détectée au moyen du thermocouple (28) placé à l'intérieur du tambour rotatif (1) et en imposant une limite maximale à la température (T_29) du cylindre extérieur (13) détectée au moyen dudit troisième thermocouple (29).

11. Machine de torréfaction (100) pour des grains à torréfier selon la revendication 8, **caractérisée en ce que** la régulation de la puissance de ladite au moins une bobine d'induction (15) est réalisée en utilisant comme signal de commande d'entrée à un contrôleur PID la température (T_27) dans l'espace entre le tambour rotatif (1) et le cylindre (13) lue avec le deuxième thermocouple (27) et en fixant une limite de température maximale du cylindre extérieur (13) et en utilisant comme signal de commande le thermocouple (29) placé sur ce dernier.

12. Machine de torréfaction (100) pour des grains à torréfier selon la revendication 11 ou selon l'une quelconque des revendications 3 à 9, **caractérisée en ce que** la régulation de la puissance de ladite seconde bobine d'induction (24) est obtenue en utilisant comme signal de commande la température (T_28) à l'intérieur du tambour rotatif détectée au moyen du premier thermocouple (28) en tant qu'entrée à un contrôleur PID.

13. Machine de torréfaction (100) pour des grains à torréfier selon l'une quelconque des revendications précédentes, dans laquelle ledit conduit de déchargement (17) est pourvu d'une soupape de régulation du flux d'air d'échappement (25) qui peut être réglée manuellement ou par commande électrique pour limiter le flux d'air qui traverse le cylindre de torréfaction.

14. Machine de torréfaction (100) pour des grains à torréfier selon la revendication 13, lorsqu'elle dépend de la revendication 11 ou de l'une des revendications 3 à 9, dans laquelle la régulation du flux d'air d'échappement de la soupape (25) est effectuée en fonction de l'erreur de température à l'intérieur de la chambre de torréfaction (61) référencée au thermocouple (28), de l'erreur de température à l'extérieur du tambour rotatif (1) référencée au thermocouple (27), de la puissance appliquée à ladite au moins une bobine d'induction (15) et de la puissance appliquée à la seconde bobine d'induction (24).
